(19) **Europäisches Patentamt**
**European Patent Office**
**Office européen des brevets**

(11) **EP 2 334 123 B1**

(12) **EUROPEAN PATENT SPECIFICATION**

(45) Date of publication and mention
of the grant of the patent:
**23.07.2014 Bulletin 2014/30**

(51) Int Cl.:
***H04W 52/26*** *(2009.01)*    ***H04B 17/00*** *(2006.01)*

(21) Application number: **09815590.6**

(86) International application number:
**PCT/CN2009/073384**

(22) Date of filing: **20.08.2009**

(87) International publication number:
**WO 2010/034221 (01.04.2010 Gazette 2010/13)**

(54) **POWER CORRECTING METHOD, ADAPTING TO MULTIPLE SIGNAL-BANDWIDTHS**

AN MEHRERE SIGNALBANDBREITEN ANPASSBARES LEISTUNGSKORREKTURVERFAHREN

PROCÉDÉ DE CORRECTION DE PUISSANCE S'ADAPTANT À DE MULTIPLES BANDES PASSANTES DE SIGNAL

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.09.2008 CN 200810216372**

(43) Date of publication of application:
**15.06.2011 Bulletin 2011/24**

(73) Proprietor: **ZTE Corporation**
**Shenzhen, Guangdong 518057 (CN)**

(72) Inventors:
 • **LIAO, Juan**
  **Shenzhen**
  **Guangdong 518057 (CN)**
 • **TIAN, Jianwei**
  **Shenzhen**
  **Guangdong 518057 (CN)**

 • **BIE, Yenan**
  **Shenzhen**
  **Guangdong 518057 (CN)**

(74) Representative: **Schröer, Gernot H.**
**Meissner, Bolte & Partner GbR**
**Bankgasse 3**
**90402 Nürnberg (DE)**

(56) References cited:
**EP-A1- 1 786 163       WO-A1-2008/034023**
**WO-A2-2007/035181      CN-A- 101 383 666**
**US-A1- 2006 229 026     US-A1- 2008 167 063**
**US-B2- 7 292 625**

 • **Agilent Technologies: "Testing CDMA Base Station Amplifier", , 30 June 2000 (2000-06-30), XP55038837, Retrieved from the Internet: URL: http://cp.literature.agilent.com/litwe b/pdf/ 5967-5486E.pdf [retrieved on 2012-09-21]**

**EP 2 334 123 B1**

**Description**

Technical Field

The present invention relates to a power calibrating method applicable to a plurality of signal bandwidths, and in particular, to a situation where signals with different bandwidths need to share hardware in the field of communication. The document US2006/229026, 12 October 2006, has disclosed the related art.

Technical Background

In the field of wireless communication, transmission and output power is required to be calibrated in order to ensure accuracy of output signals; receiving power is required to be calibrated in order to ensure accuracy of the reported power of a receiver. The calibrated data is different for different individuals, and is generally stored in a base station a memory chip (for example, EEROM) of a remote radio unit (RRU).

On one hand, a new standard, Long Term Evolution (LTE), defines signals with different levels of bandwidth from 1.4MHz to 20MHz; on the other hand, a concept of a soft base station arises gradually with the continuous development of the software radio technology. It is desirable that the future developing trend, whether of the soft base station or of the LTE, is to enable a device to adapt to different standards and different signal bandwidths without changing hardware.

As for power calibration, power calibration data cannot be duplicated since each hardware device has its own particularity. When application of the device is required to be changed during its use in outfield, for example, for the LTE, when the bandwidth is required to be upgraded from 3MHz to 5MHz, the hardware device cannot be recalibrated and is required to be sent back to the factory for recalibration, which increases the maintenance cost of the device. Therefore, it is desired that the calibration data inside the device can be processed properly to adapt to new demands.

Thus, there is a need for a method of solving the power calibration problems under different bandwidth conditions in order to adapt to flexible use requirements of the future device and enable the hardware to become one platform.

Summary of the Invention

In order to solve the above technical problem, the present invention provides a power calibrating method applicable to a plurality of signal bandwidths such that a hardware platform can adapt to unification of calibration data under different bandwidth conditions.

In order to solve the above technical problem, the present invention provides a power calibrating method applicable to a plurality of signal bandwidths comprising the following steps of:

(a) selecting a bandwidth *BW* of a signal which is a calibration signal source;
(b) scanning a whole frequency band at step *STEP* by taking the signal with the bandwidth *BW* as a unit to obtain calibration data; and
(c) determining calibrating values of signal bandwidths that are required to be compatible based on the obtained calibration data, and calibrating power according to the calibrating values.

Further, the power calibrating method has the following feature: in step (a), the bandwidth *BW* of the signal which is the calibration signal source is a minimum bandwidth *BWmin* determined by a bandwidth of a greatest common divisor of the signal bandwidths in a frequency division duplexing (FDD) mode that are required to be compatible.

Further, the power calibrating method has the following feature: in step (a), when only a portion of the signal bandwidths that are required to be compatible have a greatest common divisor, the bandwidth *BW* of the signal which is the calibration signal source is the minimum bandwidth *BWmin* determined by the bandwidth of the greatest common divisor of the portion of the signal bandwidths that are compatible, and calibrating values of the remaining non-compatible signals can be obtained by a simple correction method.

Further, the power calibrating method may have the following feature: in step (a), when there is no multiple relation between the signal bandwidths that are required to be compatible, a single-tone signal may be used as the calibration signal source.

Further, the power calibrating method may have the following feature: in step (b), the step of obtaining the calibration data comprises fixing a medium frequency and a radio frequency and scanning a medium frequency band and a radio frequency band at the step *STEP to* obtain the calibration data for storing in a memory chip.

Further, the power calibrating method may have the following feature: in step (c), the calibrating values of the signal bandwidths that are required to be compatible are calculated as follows:

$$deltaG = P_{\text{standard}} / P_{\text{before calibration}} = K * N / (\sum_{i=1}^{N} deltaG_i)$$

where the calibrating value *deltaG* is a ratio; $deltaG_I$ *(i=1... N)* is a calibrating value corresponding to a signal with a bandwidth within $[f_0\text{-}BW_0/2, f_0\text{+}BW_0/2]$ at a certain radio frequency; $BW_0$ is a bandwidth of a useful signal; *N* is a value determined based on different signal bandwidths and steps; and *K* is a correction factor determined through experiments.

Further, the power calibrating method may have the following feature: in step (b), the step of obtaining the calibration data further comprises: fixing the medium frequency and the radio frequency respectively and scanning the radio frequency band and the medium frequency band respectively at the step *STEP to* obtain the calibration data for storing in the memory chip.

Further, the power calibrating method may have the following feature: in step (c), the calibrating values of the signal bandwidths that are required to be compatible are calculated as follows:

$$deltaG = K * N / (\sum_{i=1}^{N} (deltaG_{I,IF} + deltaG_{I,RF}))$$

where $deltaG_{I,IF}$ corresponds to a frequency range of $[f_{IF}\text{-}BW_0/2, f_{IF}\text{+}BW_0/2]$, and $deltaG_{I,RF}$ corresponds to a frequency range of $[f_{RF}\text{-}BW_0/2, f_{RF}\text{+}BW_0/2]$; $BW_0$ is a bandwidth of a useful signal; *N* is a value determined based on different signal bandwidths and steps; and *K* is a correction factor determined through experiments.

Further, the power calibrating method may have the following feature: the order of the step of fixing the medium frequency and scanning the radio frequency band and the step of fixing the radio frequency and scanning the medium frequency band is not distinguishing.

Further, the power calibrating method may have the following feature: the step *STEP* is selected as a multiple of *BWmin* or of a frequency step close to *BWmin* when *BWmin* is less than or equal to a desired frequency step, and is selected as a value of the desired frequency step or a multiple thereof when *BWmin* is greater than the desired frequency step. Further, the power calibrating method may have the following feature: a multiple relation the step *STEP* and *BWmin* should be considered upon the selection of the step *STEP* so as to cover the whole frequency band completely.

Compared with the prior art, the power calibrating method applicable to a plurality of signal bandwidths in accordance with the present invention enable the same hardware platform to support different applications. When different applications are supported, it is not necessary to send the hardware back to the factory for recalibration, instead, the recalibration can be achieved by upgrading software, thus saving transportation cost, shortening upgrading period, and improving upgrading efficiency.

Brief Description of Drawings

The present invention will be further described in detail below with reference to the accompanying drawings and specific embodiments.

FIG. 1 illustrates a conventional power calibrating method;

FIG. 2 illustrates the first power calibrating method applicable to a plurality of signal bandwidths according to the present invention; and

FIG. 3 illustrates the second power calibrating method applicable to a plurality of signal bandwidths according to the present invention.

Preferred Embodiments of the Invention

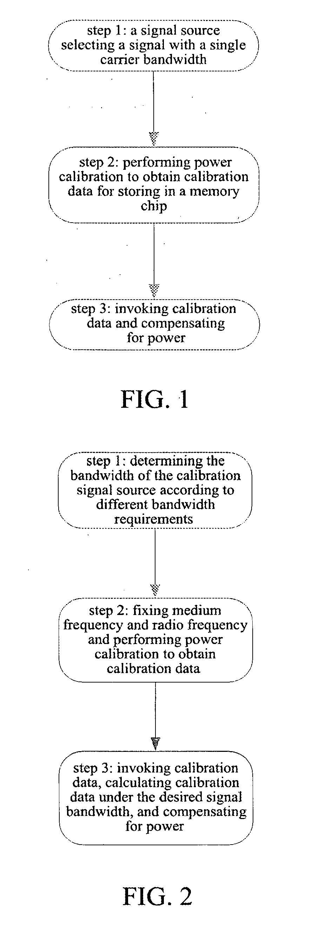

The present invention provides a power calibrating method which is more applicable to a plurality of signal bandwidths on the basis of the conventional power calibrating method shown in FIG. 1.

A power calibrating method applicable to a plurality of signal bandwidths shown in FIG. 2 comprises the following steps:

1. A signal bandwidth of a calibration signal source is selected. A bandwidth of a greatest common divisor is selected from signal bandwidths that are required to be compatible to determine the minimum bandwidth *BWmin* as the signal bandwidth *BW* of the calibration signal source. When only a portion of the signal bandwidths that are required to be compatible have a greatest common divisor, the bandwidth *BW* of the signal which is the calibration signal source is the minimum bandwidth *BWmin* determined based on a bandwidth of the greatest common divisor of the portion of the signal bandwidths that is compatible. There is no multiple relation between the remaining bandwidths and *BWmin*, the calibration data is required to be corrected by a correction factor so as to ensure accuracy. The type of the signal source may be determined according to different requirements. The present invention is applicable to the LTE standard and WCDMA/CDMA/GSM standard. For example, since a total of six signal bandwidths (1.4MHz/3MHz/5MHz/10MHz/15MHz/20MHz) is defined for the LTE, the bandwidths are required to be analyzed to select a bandwidth of the greatest common divisor (*BWmin*) as the bandwidth of the calibration signal source. If a signal with a bandwidth of 1.4MHz is required to be compatible, in order to improve working efficiency, the greatest common divisor *BWmin* is selected from the bandwidths other than 1.4MHz as the bandwidth of the calibration signal source, and afterwards the calibration data is corrected through a correction factor.

2. A medium frequency is fixed at the center frequency of the medium frequency and a radio frequency is fixed, and a medium frequency band and a radio frequency band are scanned at step *STEP*. Whenever the radio frequency changes by a frequency point, the whole medium frequency bandwidth (for example, a bandwidth of 20Mhz in the LTE) is required to be scanned once at the step *STEP* by taking the signal with the bandwidth *BWmin* as a unit to obtain two-dimensional calibration data. In the case where *BWmin* is relatively small, the step may be selected as *BWmin*; in the case where *BWmin* is relatively large, the step may be selected as the desired frequency step in various standards or a multiple thereof. If *STEP* is not consistent with the desired step of the product, then the calibration data is required to be smoothened according to the desired step of the product and is stored.

3. Since the obtained calibration data has been already frequency response error of the whole frequency channel, a weight average of the calibration data within the signal range is calculated according to the following formula to obtain calibrating values of the signal bandwidths that are required to be compatible:

$$deltaG = P_{standard} \Big/ P_{before\ calibration} = K * N / (\sum_{i=1}^{N} deltaG_i)$$

where *deltaG* is a ratio without unit; $deltaG_I$ (i=1...N) is a corresponding calibration value within $[f_0-BW_0/2, f_0+BW_0/2]$ at a certain radio frequency; $BW_0$ is a bandwidth of a useful signal; $N=[BW_0/BWmin]$, [] here means rounding and is the same as below, i.e., the desired number of calibration points *N* within $BW_0$ is obtained based on the bandwidth $BW_0$ of the signal and the signal bandwidth *BWmin* at the time of calibration; and *K* is a correction factor, which can be adjusted through experiments.

4. The power is calibrated based on the calculated calibration value. The final output power (or received measure power) $P_{after\ calibration} = P_{before\ calibration} *deltaG,$ with a unit being W.

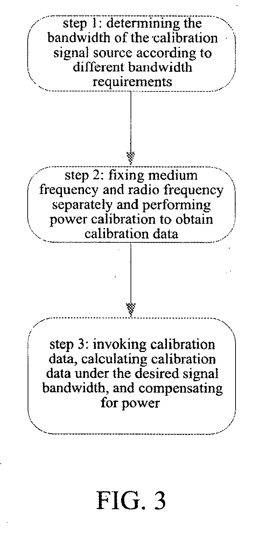

FIG. 3 illustrates another power calibrating method applicable to a plurality of signal bandwidths according to the present invention, wherein another power calibrating method is used in step 2, a medium frequency is fixed at the center frequency of the medium frequency, and a radio frequency band is scanned at step *STEP* by taking a signal with a bandwidth of *BWmin* as a unit to obtain a set of calibration data, which is smoothened at the desired step of the protocol and is stored in the device.

Subsequently, a radio frequency is fixed, and a medium frequency band is scanned at the step *STEP* by taking the signal with the bandwidth of *BWmin* as a unit to obtain a set of calibration data, which is smoothened at the desired step of the protocol and is stored in the device.

The order of the two scannings is not distinguishing.

Since a medium frequency calibration value $deltaG_{I,IF}$ and a radio frequency calibration value $deltaG_{I,RF}$ (I=1...N) are obtained, $deltaG_{I,IF}$ corresponds to a frequency range of $[f_{IF}-BW_0/2, f_{IF}+BW_0/2]$, and $deltaG_{I,RF}$ corresponds to a frequency range of $[f_{RF}-BW_0/2, f_{RF}+BW_0/2]$, Then accordingly, the calibration value within the whole bandwidth in step 3 is:

$$deltaG = K * N / (\sum_{i=1}^{N}(deltaG_{i,IF} + deltaG_{i,RF}))$$

where *deltaG* is a ratio; $BW_0$ is a bandwidth of a useful signal; *N* is determined by the same method as the first one; and *K* is a correction factor, which can be adjusted through experiments.

Industrial Applicability

Compared with the prior art, the power calibrating method applicable to a plurality of signal bandwidths in accordance with the present invention enable the same hardware platform to support different applications. When different applications are supported, it is not necessary to send the hardware back to the factory for recalibration, instead, the recalibration can be achieved by upgrading software, thus saving transportation cost, shortening upgrading period, and improving upgrading efficiency.

**Claims**

1.  A power calibrating method applicable to a device with a plurality of signal bandwidths comprising the following steps of:

    a: selecting a bandwidth *BW* of a signal which is a calibration signal source;
    b: scanning a whole frequency band at step *STEP* by taking the signal with the bandwidth *BW* as a unit to obtain calibration data; and
    c: determining, based on the obtained calibration data, calibrating values of signal bandwidths that are required to be compatible in the device, and calibrating power according to the calibrating values;

    wherein the method is **characterized in that**
    in step a, the bandwidth *BW of* the signal which is the calibration signal source is a minimum bandwidth *BWmin* determined by a bandwidth of a greatest common divisor of the signal bandwidths in a frequency division duplexing (FDD) mode that are required to be compatible:

    when only a portion of the signal bandwidths that are required to be compatible have a greatest common divisor, the bandwidth *BW* of the signal which is the calibration signal source is the minimum bandwidth *BWmin* determined by the bandwidth of the greatest common divisor of the portion of the signal bandwidths that are compatible.

2.  The power calibrating method according to claim 1, wherein in step a, when there is no multiple relation between the signal bandwidths that are required to be compatible, the signal which is the calibration signal source is a single-tone signal.

3.  The power calibrating method according to any one of claim 1-2, wherein step b comprises fixing an intermediate frequency and a radio frequency and scanning an intermediate frequency band and a radio frequency band at the step *STEP* to obtain the calibration data for storing in a memory chip.

4.  The power calibrating method according to claim 3, wherein in step c, the step of determining the calibrating values of the signal bandwidths that are required to be compatible comprises determining the calibrating values according to the following formula:

$$deltaG = P_{standard} \Big/ P_{before\ calibration} = K * N / (\sum_{i=1}^{N} deltaG_i)$$

where the calibrating value *deltaG* is a ratio; $deltaG_i$ (*i*=1...*N*) is a calibrating value corresponding to a signal with a bandwidth within $[f_0 - BW_0/2, f_0 + BW_0/2]$ at a certain radio frequency; $BW_0$ is a bandwidth of a useful signal; *N* is a value determined based on different signal bandwidths and steps; and *K* is a correction factor determined through experiments.

5. The power calibrating method according to any one of claim 1-2, wherein step b further comprises:

fixing an intermediate frequency and scanning a radio frequency band at the step *STEP* to obtain the calibration data for storing in the memory chip; and
fixing the radio frequency and scanning the intermediate frequency band at the step *STEP* to obtain the calibration data for storing in the memory chip.

6. The power calibrating method according to claim 5, wherein in step c, the calibrating values of the signal bandwidths that are required to be compatible are calculated as follows:

$$deltaG = K * N / (\sum_{i=1}^{N}(deltaG_{i,IF} + deltaG_{i,RF}))$$

where $deltaG_{I,IF}$ is a calibrating value corresponding to a frequency range of $[f_{IF}-BW_0/2, f_{IF}+BW_0/2]$, and $deltaG_{I,RF}$ is a calibrating value corresponding to a frequency range of $[f_{RF}-BW_0/2, f_{RF}+BW_0/2]$; $BW_0$ is a bandwidth of a useful signal; $N$ is a value determined based on different signal bandwidths and steps; and $K$ is a correction factor determined through experiments.

7. The power calibrating method according to claim 1, wherein, step b comprises fixing an intermediate frequency and a radio frequency and scanning an intermediate frequency band and a radio frequency band at the step *STEP to* obtain the calibration data for storing in a memory chip, wherein, the step *STEP* is selected as a multiple of *BWmin* or of a frequency step close to *BWmin* when *BWmin* is less than or equal to a desired frequency step, and is selected as a value of the desired frequency step or a multiple thereof when *BWmin* is greater than the desired frequency step; or
step b further comprises: fixing the intermediate frequency and scanning the radio frequency band at the step *STEP to* obtain the calibration data for storing in the memory chip; and fixing the radio frequency and scanning the intermediate frequency band at the step *STEP to* obtain the calibration data for storing in the memory chip, wherein, the step *STEP* is selected as a multiple of *BWmin* or of a frequency step close to *BWmin* when *BWmin* is less than or equal to a desired frequency step, and is selected as a value of the desired frequency step or a multiple thereof when *BWmin* is greater than the desired frequency step.

## Patentansprüche

1. Bei einer Vorrichtung mit einer Vielzahl von Signalbandbreiten einsetzbares Verfahren zur Leistungskalibrierung, welches die folgenden Schritte umfasst:

a: Auswahl einer Bandbreite *BW* eines Signals, welches eine Quelle für das Kalibriersignal ist;
b: Abtastung eines ganzen Frequenzbandes im Schritt *STEP,* wobei das Signal mit der Bandbreite *BW* als Einheit herangezogen wird, um Kalibrierungsdaten zu erhalten;
c: auf der Grundlage der erhaltenen Kalibrierungsdaten Bestimmung von Kalibrierungswerten von Signalbandbreiten, welche in der Vorrichtung kompatibel sein müssen, und Kalibrierung der Leistung in Entsprechung zu den Kalibrierungswerten;

wobei das Verfahren **dadurch gekennzeichnet ist, dass** im Schritt a die Bandbreite *BW des* Signals, welches eine Quelle für das Kalibriefsignal ist, eine Mindestbandbreite *BWmin* darstellt, die durch eine Bandbreite eines größten gemeinsamen Teilers der Signalbandbreiten in einem Frequenzteilungs-Duplexmodus (FDD-Betrieb) bestimmt wird, welche kompatibel sein müssen,
wobei dann, wenn nur ein Abschnitt der Signalbandbreiten, die kompatibel müssen, einen größten gemeinsamen Teiler aufweisen, die Bandbreite BW des Signals, welches die Quelle für das Kalibriersignal ist, die Mindestbandbreite *BWmin* ist, welche durch die Bandbreite des größten gemeinsamen Teiles des Teils der Signalbandbreiten bestimmt wird, welche kompatibel sind.

2. Verfahren zur Leistungskalibrierung nach Anspruch 1, bei welchem im Schritt a dann, wenn es keine mehrfache Beziehung zwischen den Signalbandbreiten gibt, die kompatibel sein müssen, das Signal, das die Quelle für das Kalibriersignal ist, ein Signal mit einem einzelnen Ton ist.

3. Verfahren zur Leistungskalibrierung nach einem der Ansprüche 1 bis 2, bei welchem der Schritt b die Festlegung einer Zwischenfrequenz und einer Funkfrequenz und die Abtastung eines Zwischenfrequenzbandes und eines Funkfrequenzbandes im Schritt *STEP* umfasst, um die Kalibrierungsdaten zum Abspeichern in einem Speicherchip zu erhalten.

4. Verfahren zur Leistungskalibrierung nach Anspruch 3, bei welchem im Schritt c der Schritt zur Bestimmung der Kalibrierungswerte der Signalbandbreiten, die kompatibel sein müssen, die Bestimmung der Kalibrierungswerte gemäß der folgenden Formel umfasst:

$$deltaG = P_{standard} / P_{before\ calibration} = K * N / (\sum_{i=1}^{N} deltaG_i)$$

wobei der Kalibrierungswert *deltaG* ein Verhältnis ist;
$deltaG_i$ ($i$ = 1 ... $N$) ein Kalibrierungswert ist, welcher einem Signal mit einer Bandbreite innerhalb von $[f_0 - BW_0/2, f_0 + BW_0/2]$ bei einer bestimmten Funkfrequenz ist; $BW_0$ eine Bandbreite eines Nutzsignals ist; $N$ ein Wert ist, der auf der Grundlage verschiedener Signalbandbreiten und Schritte bestimmt wird; und $K$ ein Korrekturfaktor ist, der durch Experimente bestimmt wird.

5. Verfahren zur Leistungskalibrierung nach einem der Ansprüche 1 bis 2, bei welchem der Schritt b des Weiteren folgendes umfasst:

Festlegung einer Zwischenfrequenz und Abtastung eines Funkfrequenzbandes im Schritt *STEP,* um die Kalibrierungsdaten zur Abspeicherung in dem Speicherchip zu erhalten; und
Festlegung der Funkfrequenz und Abtastung des Zwischenfrequenzbandes im Schritt *STEP,* um die Kalibrierungsdaten zur Abspeicherung in dem Speicherchip zu erhalten.

6. Verfahren zur Leistungskalibrierung nach Anspruch 5, bei welchem im Schritt c die Kalibrierungswerte der Signalbandbreiten, die kompatibel sein müssen, wie folgt berechnet werden:

$$deltaG = K * N / (\sum_{i=1}^{N} (deltaG_{i,IF} + deltaG_{i,RF}))$$

wobei der Kalibrierungswert $DeltaG_{i,\ RF}$ ein Kalibrierungswert ist, der einem Frequenzbereich von $[f_{IF} - BW_0/2, f_{IF} + BW_0/2]$ entspricht und $DeltaG_{i,\ RF}$ ein Kalibrierungswert ist, der einem Frequenzbereich von $[f_{RF} - BW_0/2, f_{RF} + BW_0/2]$ entspricht; $BW_0$ eine Bandbreite eines Nutzsignals ist; $N$ ein Wert ist, der auf der Grundlage verschiedener Signalbandbreiten und Schritte bestimmt wird; und $K$ ein Korrekturfaktor ist, der durch Experimente bestimmt wird.

7. Verfahren zur Leistungskalibrierung nach Anspruch 1, bei welchem der Schritt b die Festlegung einer Zwischenfrequenz und einer Funkfrequenz und die Abtastung eines Zwischenfrequenzbandes und einer Funkfrequenzbandes im Schritt *STEP* umfasst, um die Kalibrierungsdaten zum Abspeichern in einem Speicherchip zu erhalten, wobei der Schritt STEP als Mehrfaches von *BWmin* oder eines Frequenzschrittes nahe bei *BWmin* gewählt wird, wenn *BWmin* kleiner als ein gewünschter Frequenzschritt oder gleich diesem ist und als Wert des gewünschten Frequenzschrittes oder eines Vielfachen desselben ausgewählt wird, wenn *BWmin* größer als der gewünschte Frequenzschritt ist;
oder
der Schritt b des Weiteren folgendes umfasst: Festlegung der Zwischenfrequenz und Abtastung des Funkfrequenzbandes im Schritt *STEP,* um die Kalibrierungsdaten zur Abspeicherung im Speicherchip zu erhalten; und Festlegung der Funkfrequenz und Abtastung des Zwischenfrequenzbandes im Schritt *STEP,* um die Kalibrierungsdaten zur Abspeicherung im Speicherchip zu erhalten, wobei der Schritt *STEP* als Mehrfaches von $BW_{min}$ oder eines Fre-

quenzschrittes nahe bei $BW_{min}$ ausgewählt wird, wenn $BW_{min}$ kleiner als ein gewünschter Frequenzschritt oder gleich diesem ist, und als Wert des gewünschten Frequenzschrittes oder als Vielfaches davon gewählt wird, wenn $BW_{min}$ größer als der gewünschte Frequenzschritt ist.

## Revendications

1. Procédé de calibrage de puissance applicable à un dispositif avec une pluralité de largueurs de bande de signal, comprenant les étapes suivantes de:

   a: sélectionner une largueur de bande $BW$ d'un signal qui est une source de signal de calibrage;
   b: scanner une bande de fréquence totale à l'étape $STEP$ en prenant le signal avec la largueur de bande $BW$ comme une unité pour obtenir des données de calibrage; et
   c: déterminer, sur la base des données de calibrage obtenues, des valeurs de calibrage de largueurs de bande de signal qui sont requises pour être compatibles dans le dispositif, et la puissance de calibrage en accord avec les valeurs de calibrage;

   où le procédé est **caractérisé en ce que**
   à l'étape a, la largueur de bande $BW$ du signal, qui est la source de signal de calibrage, est une largueur de bande minimum $BWmin$ déterminée par une largueur de bande d'un diviseur commun le plus grand des largueurs de bande de signal en un mode de duplexage de division de fréquence (FDD) qui sont requises pour être compatibles; lorsque seulement une portion des largueurs de bande de signal qui sont requises pour être compatibles ont le diviseur commun le plus grand, la largueur de bande $BW$ du signal qui est la source de signal de calibrage est la largueur de bande minimum $BWmin$ déterminée par la largueur de bande du diviseur commun le plus grand de la portion des largueurs de bande de signal qui sont compatibles.

2. Procédé de calibrage de puissance selon la revendication 1, dans lequel à l'étape a, lorsqu'il n'y a pas de relation multiple entre les largueurs de bande de signal qui sont requises pour être compatibles, le signal qui est la source de signal de calibrage, est un signal sonore simple.

3. Procédé de calibrage de puissance selon l'une quelconque des revendications 1-2, dans lequel l'étape b comprend la fixation d'une fréquence intermédiaire et d'une radiofréquence et le balayage d'une bande de fréquence intermédiaire et d'une bande de radiofréquence à l'étape $STEP$ pour obtenir les données de calibrage pour le stockage dans une puce de mémoire.

4. Procédé de calibrage de puissance selon la revendication 3, dans lequel à l'étape c, l'étape de détermination des valeurs de calibrage des largueurs de bande de signal qui sont requises pour être compatibles comprend la détermination des valeurs de calibrage en accord avec la formule suivante :

$$deltaG = P_{standard} \Big/ P_{before\ calibration} = K * N / (\sum_{i=1}^{N} deltaG_i)$$

   où la valeur de calibrage $deltaG$ est un rapport; $deltaG_i$ ($i$=1...N) est une valeur de calibrage correspondant à un signal avec une largueur de bande dans $[f_0\text{-}BW_0/2,\ f_0\text{+}BW_0/2]$ à une certaine radiofréquence;
   $BW_0$ est une largueur de bande d'un signal utile; $N$ est une valeur déterminée sur la base de largueurs de bande de signal et étapes différentes; et $K$ est une facteur de correction déterminé par des expériences.

5. Procédé de calibrage de puissance selon l'une quelconque des revendications 1-2, dans lequel l'étape b comprend en outre:

   fixer une fréquence intermédiaire et scanner une bande de radiofréquence à l'étape $STEP$ pour obtenir les données de calibrage pour le stockage dans la puce de mémoire; et
   fixer la radiofréquence et scanner la bande de fréquence intermédiaire à l'étape $STEP$ pour obtenir les données de calibrage pour le stockage dans la puce de mémoire.

**6.** Procédé de calibrage de puissance selon la revendication 5, dans lequel à l'étape c, les valeurs de calibrage des largeurs de bande de signal qui sont requises pour être compatibles sont calculées comme suit:

$$ deltaG = K * N / (\sum_{i=1}^{N} (deltaG_{i,IF} + deltaG_{i,RF})) $$

où $deltaG_{i,IF}$ est une valeur de calibrage correspondant à une plage de fréquence de $[f_{IF}-BW_0/2, f_{IF}+BW_0/2]$, et $deltaG_{i,RF}$ est une valeur de calibrage correspondant à une plage de fréquence de $[f_{RF}-BW_0/2, f_{RF}+BW_0/2]$; $BW_0$ est une largeur de bande d'un signal utile; $N$ est une valeur déterminée sur la base de différentes largeurs de bande de signal et d'étapes; et $K$ est un facteur de correction déterminé par des expériences.

**7.** Procédé de calibrage de puissance selon la revendication 1, dans lequel l'étape b comprend la fixation d'une fréquence intermédiaire et d'une radiofréquence et le balayage d'une bande de fréquence intermédiaire et d'une bande de radiofréquence à l'étape *STEP* pour obtenir des données de calibrage pour le stockage dans une puce de mémoire, où l'étape *STEP* est sélectionnée comme un multiple de *BWmin* ou d'une étape de fréquence proche de *BWmin* lorsque *BWmin* est inférieure ou égale à une étape de fréquence recherchée, et est sélectionnée comme une valeur de l'étape de fréquence recherchée ou d'un multiple de celle-ci lorsque *BWmin* est plus grand que l'étape de fréquence recherchée;
ou bien
l'étape b comprend en outre: fixer la fréquence intermédiaire et balayer la bande de radiofréquence à l'étape *STEP* pour obtenir les données de calibrage pour le stockage dans la puce de mémoire; et fixer la radiofréquence et balayer la bande de fréquence intermédiaire à l'étape *STEP* pour obtenir les données de calibrage pour le stockage dans la puce de mémoire, où l'étape *STEP* est sélectionnée comme un multiple de *BWmin* ou d'une étape de fréquence proche de *BWmin* lorsque *BWmin* est inférieure ou égale à une étape de fréquence recherchée, et est sélectionnée comme une valeur de l'étape de fréquence recherchée ou d'un multiple de celle-ci lorsque *BWmin* est plus grande que l'étape de fréquence recherchée.

step 1: a signal source
selecting a signal with a single
carrier bandwidth

step 2: performing power
calibration to obtain calibration
data for storing in a memory
chip

step 3: invoking calibration
data and compensating
for power

## FIG. 1

step 1: determining the
bandwidth of the calibration
signal source according to
different bandwidth
requirements

step 2: fixing medium
frequency and radio frequency
and performing power
calibration to obtain
calibration data

step 3: invoking calibration
data, calculating calibration
data under the desired signal
bandwidth, and compensating
for power

## FIG. 2

step 1: determining the
bandwidth of the calibration
signal source according to
different bandwidth
requirements

step 2: fixing medium
frequency and radio frequency
separately and performing
power calibration to obtain
calibration data

step 3: invoking calibration
data, calculating calibration
data under the desired signal
bandwidth, and compensating
for power

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006229026 A